Europäisches Patentamt

European Patent Office

Office européen des brevets

(19)

(11) Veröffentlichungsnummer: **0 079 419**
**A1**

(12) # EUROPÄISCHE PATENTANMELDUNG

(21) Anmeldenummer: 82100749.9

(22) Anmeldetag: 03.02.82

(51) Int. Cl.³: **F 16 H 55/44**
**B 21 D 53/26**

(30) Priorität: 12.11.81 US 320516

(43) Veröffentlichungstag der Anmeldung:
25.05.83 Patentblatt 83/21

(84) Benannte Vertragsstaaten:
AT DE FR GB IT NL SE

(71) Anmelder: Winkelmann & Pannhoff GmbH
Schmalbachstrasse 2
D-4730 Ahlen(DE)

(72) Erfinder: Winkelmann, Heinrich
Auf dem Westkamp 26
D-4730 Ahlen/Westf.(DE)

(74) Vertreter: Patentanwälte Meinke und Dabringhaus
Dipl.-Ing. J. Meinke Dipl.-Ing. W. Dabringhaus
Westenhellweg 67
D-4600 Dortmund 1(DE)

(54) Mehrfach-V-Riemenscheibe und Verfahren zu ihrer Herstellung.

(57) Bei einer Mehrfach-V-Riemenscheibe, geformt aus einem schalenförmigen Blech-Rohling (10) mit einer Endwandung (12) und einer damit aus einem Stück bestehenden zylindrischen Wandung (14), welch letztere sich von der Endwandung (12) seitlich erstreckt und eine Innenfläche (24) und eine Außenfläche (26) aufweist, in denen jeweils eine Anzahl von miteinander abwechselnden Vorsprüngen (30, 34) und Rillen (28, 32) ausgebildet sind, wobei jeweils eine in der Innenfläche (24) ausgebildete Rille (32) mit einem Vorsprung (34) in der Außenfläche (26) der zylindrischen Wandung (14) fluchtet und eine Rille (28) in der Außenfläche (26) mit einem Vorsprung (30) in der Innenfläche (24) fluchtet und die Stärke der zylindrischen Wandung (14) zwischen den Tälern der Rillen (28) in der Außenfläche (26) und den Vorsprüngen (34) in der Innenfläche (24) beträchtlich geringer ist als zwischen den Tälern der Rillen (32) in der Innenfläche (24) und den Vorsprüngen (30) in der Außenfläche (26) und ferner die Tiefe der Rillen (28) in der Außenfläche (26) größer ist als die Tiefe der Rillen (32) in der Innenfläche (24), ist die Gesamtlänge aller Vorsprünge (34) in der Innenfläche (24) wesentlich größer als die Gesamtlänge aller Vorsprünge (30) in der Außenfläche (26), wobei die Vorsprünge (34) in der Innenfläche (24) eine durch die Rillen (32) in der Innenfläche unterbrochene gerade Linie in Axialrichtung der zylindrischen Wandung (14) bilden.

FIG.3

Mehrfach-V-Riemenscheibe und Verfahren zu ihrer

Herstellung.

Die Erfindung betrifft eine Mehrfach-V-Riemenscheibe, geformt aus einem schalenförmigen Blech-Rohling mit einer Endwandung und einer damit aus einem Stück bestehenden zylindrischen Wandung, welch letztere sich von der Endwandung seitlich erstreckt und eine Innenfläche und eine Außenfläche aufweist, in denen jeweils eine Anzahl von miteinander abwechselnden Vorsprüngen und Rillen ausgebildet sind, wobei jeweils eine in der Innenfläche ausgebildete Rille mit einem Vorsprung in der Außenfläche der zylindrischen Wandung fluchtet und eine Rille in der Außenfläche mit einem Vorsprung in der Innenfläche fluchtet und die Stärke der zylindrischen Wandung zwischen den Tälern der Rillen in der Außenfläche und den Vorsprüngen in der Innenfläche beträchtlich geringer ist als zwischen den Tälern der Rillen in der Innenfläche und den Vorsprüngen in der Außenfläche und ferner die Tiefe der Rillen in der Außenfläche größer ist als die Tiefe der Rillen in der Innenfläche, sowie ein zur Herstellung einer solchen Riemenscheibe geeignetes Verfahren.

Bei einer bekannten Mehrfach-V-Riemenscheibe dieser Art (DE-AS 26 33 039) werden zunächst Teile der zylindri-

schen Wandung des Blech-Rohlings nach außen bzw. innen so verlagert, daß mehrere weit offene wellenartige V-förmige Rillen geringer Tiefe mit abgerundeten Rinnentälern und dazwischen liegenden abgerundeten Vorsprüngen entstehen, daß dann die Wandabschnitte dieser V-förmigen Rillen in eine Sinusform axial zusammengedrückt werden und schließlich durch ein Walzendrückverfahren das Material der sinusförmigen Wandabschnitte durch Drücken, Kaltverformen, Zusammenpressen und Extrudieren zu im Querschnitt V-förmigen Rillen mit scharfen Scheiteln und verdickten Nutentalwänden verformt wird. Die fertig verformte Riemenscheibe weist dabei in der Innenfläche ihrer zylindrischen Wandung Rillen auf, die sich in das Wandungsinnere in Trennfugen fortsetzen, d. h. in diesem Bereich sind durch das vorbeschriebene Bildungsverfahren Flächenbereiche der ursprünglich zylindrischen Innenfläche gegeneinander gepreßt, so daß diese Stellen praktisch Kerbfugen bilden, welche die Festigkeit derartiger Riemenscheiben in radialer Richtung, d. h. Treibriemen - Wirkrichtung, beträchtlich verringern, was wiederum nur dadurch ausgeglichen werden kann, daß der gesamte zylindrische Wandungsabschnitt in axialer Richtung derart stark zusammengepreßt wird, daß sich sehr dicke Wandungen ergeben, wodurch das Gewicht solcher Riemenscheiben im Verhältnis zu ihrer erzielbaren Festigkeit ungünstig hoch wird.

Zudem verlaufen die Vorsprünge zwischen den Rillen an der Innenseite der zylindrischen Wandung abgerundet, d. h. daß die radial am weitesten innen liegenden Teile jedes Vorsprunges annähernd punktförmig sind, was für die Fälle von Nachteil ist, bei denen man die Riemenscheibe mit der Innenfläche ihrer zylindrischen Wandung auf einem Wellenstumpf oder sonstigen Träger lagern will, derart, daß ein besonders genauer Sitz der Riemenscheibe ohne die Gefahr einer Verkantung oder Abbiegung gewährleistet sein soll.

Bei einer weiteren bekannten Mehrfach-V-Riemenscheibe (US-PS 4 273 547) ist zwar die Innenfläche vollständig geradlinig zylindrisch geformt. Dies bedingt aber ein relativ hohes Scheibengewicht und eine solch hohe Festigkeit der zylindrischen Wandung gegen ein Zusammenschieben in axialer Richtung, daß dieses Teil nicht Crash-geeignet ist, wie dies in jüngerer Zeit insbesondere im Personenkraftwagenbau für sämtliche Einzelteile eines Fahrzeuges weitestmöglich angestrebt wird, d. h. nicht nur für die Hauptrahmenteile.

Aufgabe der Erfindung ist die Schaffung einer Lösung, welche eine gute Befestigungsmöglichkeit der Riemenscheibe an einem Wellenstumpf od. dgl. mit bei möglichst geringem Gewicht ausreichender Festigkeit und gutem Crash-Verhalten verbindet.

Bei einer Mehrfach-V-Riemenscheibe der eingangs bezeichneten Art wird diese Aufgabe gemäß der Erfindung dadurch gelöst, daß die Gesamtlänge aller Vorsprünge in der Innenfläche wesentlich größer ist als die Gesamtlänge aller Vorsprünge in der Außenfläche, wobei die Vorsprünge in der Innenfläche eine durch die Rillen in der Innenfläche unterbrochene gerade Linie in Axialrichtung der zylindrischen Wandung bilden.

Aufgrund dieser Ausbildung kann die Riemenscheibe bei optimaler Festigkeit mit einem relativ geringen Gewicht auskommen und zeigt bei vorkommenden Unfällen ein ausgezeichnetes Crash-Verhalten, d. h. der zylindrische Wandungsteil ist auf-grund der erfindungsgemäß auch in der Innenfläche desselben vorgesehenen Innenrillen gesteuert bzw. in vorbestimmter Weise zusammenschiebbar und außerdem ist eine Riemenscheibe der betreffenden Art aufgrund ihrer an der Innenfläche der zylindrischen Wandung verbleibenden zylindrischen Bereiche der dort ausgebildeten Vorsprünge ausgezeichnet auf entsprechenden zylindrischen Wellenstümpfen od. ähnlichen Trägern befestigbar.

Falls gewünscht, kann an jedem Ende der zylindrischen Wan-

- 5 -                                    0079419

dung ein nach außen gerichteter Flansch in an sich
bekannter Weise ausgebildet sein. Die Vorsprünge in
der Außenfläche können, wie ebenfalls bekannt, eine
im wesentlichen abgerundete Form in axialer Richtung der zylindrischen Wandung aufweisen, wobei
der in der radialen Außenfläche liegende Teil jedes
Vorsprunges annähernd punktförmig ist.

Zur Herstellung einer Mehrfach-V-Riemenscheibe der vorbeschriebenen Art kann man die zylindrische Wandung unter Verringerung ihrer Axialabmessung verformen, wobei die zylindrische Wandung radial einwärts unter Formung einer Mehrzahl von Rillen in ihrer Außenfläche zur
Aufnahme eines Mehrfach-V-Riemens radial einwärts gepreßt
wird und eine Mehrzahl von Rillen in der Innenfläche geformt wird, und zwar mit einer wesentlich geringeren Tiefe als die Tiefe der Rillen in der Außenfläche, derart,
daß die Innenfläche zwischen den Rillen in axialer Richtung der zylindrischen Wandung gerade verlaufende Vorsprünge bildet.

Die Erfindung ist nachstehend anhand der Zeichnung beispielsweise näher erläutert. Diese zeigt in

Fig. 1 einen Querschnitt durch einen schalenförmigen
        Blech-Rohling,

Fig. 2 einen Querschnitt durch eine aus dem Rohling nach Fig. 1 gemäß der Erfindung hergestellte Mehrfach-V-Riemenscheibe,

Fig. 3 einen vergrößerten Querschnitt der gerillten zylindrischen Wandung der Riemenscheibe nach Fig. 2,

Fig. 4a und 4b schematische Darstellungen der zur Formung der gerillten zylindrischen Wandung der Riemenscheibe verwendeten Teile vor der Formung und nach der Formung und in

Fig. 5 eine schematische Darstellung der wesentlichen Teile eines Innenfutters zur Bildung der Innenfläche der zylindrischen Wandung der Riemenscheibe.

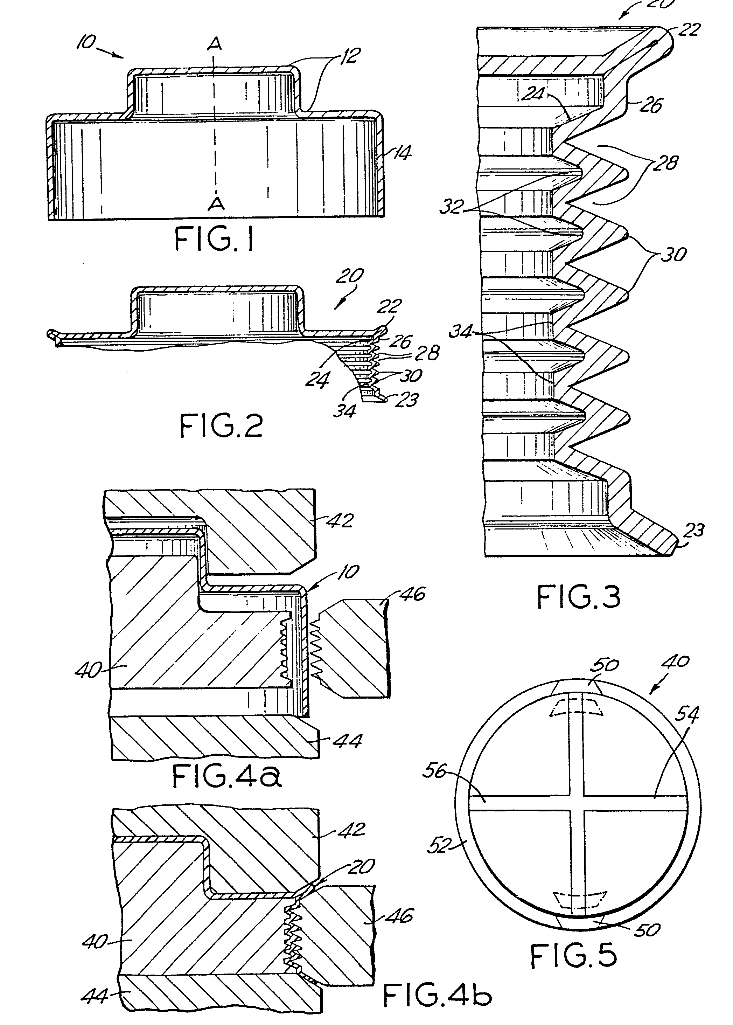

In Fig. 1 ist ein schalenfömiger Blech-Rohling 10 wiedergegeben, der aus einer kreisförmigen Endwandung 12 abgestufter Form und einer zylindrischen Wandung 14 besteht, die sich seitlich der Endwandung erstreckt und eine Achse A-A des Rohlings umgibt.

Fig. 2 zeigt eine aus dem Rohling 10 nach Fig. 1 verformte Mehrfach-V-Riemenscheibe 20.

Die die verformte zylindrische Wandung 14 vergrößert wiedergebende Fig. 3 zeigt ein Paar Flansche 22 und 23 an entgegengesetzten Enden der zylindrischen Wandung. Diese Flansche 22, 23 dienen zur Führung der gegenüberliegenden Ränder eines Mehrfach-V-Riemens auf der Riemenscheibe. Die geformte zylindrische Wandung weist eine Innenfläche 24 und eine Außenfläche 26 auf. Bei ihrer Formgebung erhält die zylindrische Wandung 14 zusätzlich zu den Flanschen 22, 23 in ihrer Außenfläche V-förmige Rillen 28, die zur genau passenden Aufnahme eines V-förmigen Vorsprunges eines Mehrfach-V-Riemens dienen. Die Rillen 28 sind durch Vorsprünge 30 getrennt, welche die radial äußere Fläche der geformten zylindrischen Wandung 14 bilden. Wie gezeigt, sind die Vorsprünge in der radial äußeren Fläche praktisch punktförmig in axialer Richtung der zylindrischen Wandung 14.

Bei der Verformung der zylindrischen Wandung 14 werden auch im wesentlichen abgerundete Rillen 32 in der Innenfläche 24 derart geformt, daß jede Rille mit einem der Vorsprünge 30 in der Außenfläche 26 der zylindrischen Wandung ausgefluchtet ist. Bei der Formgebung der Rillen 32 werden Vorsprünge 34 zwischen benachbarten Rillen 32 ausgebildet. Ungleich den Vorsprüngen 30 in der Außenfläche 26 ist jeder Vorsprung 34 in der Innenfläche geradlinig ausgebildet und sämtliche Vorsprünge 34 bilden gemeinsam eine unterbrochene gerade Linie, die sich in axialer Richtung der zylindrischen Wandung erstreckt. Im Ergebnis bilden die Vorsprünge 34 an der Innenfläche 24 der verformten zylindrischen Wandung einen Zylinder, was zur Befestigung der Riemenscheibe auf einer Welle od. dgl. mit Vorteil verwendbar ist. Die zylindrische Fläche ist durch die Rillen 32 unterbrochen. Diese Ausbildung der inneren Vorsprünge sichert einen genauen Sitz der Riemenscheibe auf einem Träger ohne jedes Spiel und verhindert eine Verkantung der Riemenscheibe.

Wenn die Innenfläche 24 der verformten zylindrischen Wandung 14 einen vom einen Ende der gerillten Außenfläche zum anderen Ende durchgehenden Zylinder bildete, würde die Riemenscheibe eine beträchtliche Festigkeit gegen ein Zusammenschieben aufweisen und wäre außerdem beträchtlich schwerer. Durch Vorsehung der Rillen 32 wird einerseits das Gewicht der Riemenscheibe wesentlich verringert, was für Fahrzeuge wesentlich ist, und vor allem wird die Zusammenschiebbarkeit der Riemenscheibe bei einem Unfall wesentlich verbessert, was ein wichtiges Sicherheitsmerkmal darstellt, da die Tendenz im Personenkraftfahrzeugbau dahin geht, nicht nur die Hauptrahmenteile, sondern soweit wie möglich jedes einzelne Konstruktionsteil eines PKW für sich Crash-geeignet auszubilden.

Wie Fig. 3 im einzelnen zeigt, wird bei der Verformung der zylindrischen Wandung 14 diese in axialer Richtung zusammengeschoben und einwärts gepreßt, so daß, verglichen mit der Ausgangskonstruktion, eine kompaktere zylindrische Wandung erzeugt wird. Dabei kann vorzugsweise vor der Einpressung der Außenrillen 28 und Innenrillen 32 noch ein Verformungsschritt vorgeschaltet werden, durch den die zylindrische Wandung 14 verdickt wird, wie dies z. B. US-PS 4 273 547 offenbart.

Die Fig. 4a und 4b zeigen schematisch die Verformung aus dem Blech-Rohling, und zwar sind die zur Formgebung verwendeten Teile lediglich teilweise im Schnitt in diesen beiden Figuren wiedergegeben. Der Rohling 10 ist anfangs auf einem drehbaren inneren Futterblock 40 angeordnet. Oberhalb und unterhalb des Blocks 40 sind Futter 42, 44 angeordnet, die während des Verformungsvorganges in axialer Richtung gegen den Block bewegt werden können. Fig. 4a zeigt den Rohling 10 in Stellung über dem Futterblock 40. Radial auswärts vom Futterblock 40 und der zylindrischen Wandung 14 des Rohlings 10 ist eine drehbare Walze 46 angeordnet, die einwärts gegen den Rohling während der Verformung bewegt werden kann. Dementsprechend wird durch Bewegung der Teile aus der Stellung gemäß Fig. 4a in die Stellung gemäß Fig. 4b unter Drehen der betreffenden Teile die Formgebung des Rohlings in die in den Fig. 2 und 3 wiedergegebene Form bewirkt.

Durch die Ausbildung der Rillen 32 wird das Gewicht der Riemenscheibe wesentlich verringert und gleichzeitig deren Zusammenschiebbarkeit verbessert. Da die Bildung der Rillen 32 nach außen sich erstreckende Vorsprünge am Innenfutterblock 40 erfordert, würde ein üblicher Innenfutterblock einem Abziehen der fertigen Riemenscheibe von dem Innenfutterblock entgegenstehen. In Fig. 5 ist daher beispielsweise ein Block 40 wiedergegeben, mittels dessen eine leichte Entfernung der fertigen Riemenscheibe nach der Formung der Rillen 32 in der Innenfläche 24 der zylindrischen Wandung möglich ist.

In Fig. 5 ist der Innenfutterblock in durchgehenden Linien in seiner Arbeitsstellung und in unterbrochenen Linien in seiner Rückzugsstellung wiedergegeben. Der Block 40 besteht aus zwei Paaren ähnlich geformter Wandungsteile 50, 52. Die Teile 50 bilden einen schmalen Bereich des kreisförmigen Umfanges des Blocks 40 und sind so ausgebildet, daß sie nach der Verformung der zylindrischen Wandung 14 in die in Fig. 2 wiedergegebene Form einwärts verschoben werden können. Die Teile 52 bilden annähernd je eine Hälfte des Umfanges des Blocks. In der in durchgehenden Linien wiedergegebenen voll ausgefahrenen Stellung der Wandungsteile 50, 52 bilden diese einen vollständigen Kreisumfang mit nach außen gerichteten Vorsprüngen 54 zur Formung der Rillen 32. Obschon in Fig. 5 nicht wiedergegeben, bilden die Vorsprünge 54 in axialer Richtung gesehen eine gerade Linie zur Ausbildung der Vorsprünge 34. Wenn die Formgebung beendet ist und die Riemenscheibe entfernt werden soll, werden die Tragarme 56, die jeweils zu einem Teilepaar 50, 52 führen, radial einwärts verschoben, wie in gestrichelten Linien wiedergegeben ist. In dieser Einwärtsstellung kann die Riemenscheibe leicht von dem Innenfutterblock entfernt werden. Eine Vielzahl bekannter Mechanismen stehen zur Bewirkung der Einwärtsbewegung der Tragarme zur Verfügung.

Aufgrund der vorbeschriebenen Ausbildung kann eine relativ billige Riemenscheibe 20 aus einem Blech-Rohling in einem einfachen Verfahren erzeugt werden. Die Form der Außenfläche 26 der Riemenscheibe sichert einen exakten Eingriff mit einem Mehrfach-V-Riemen. Die gerillte Innenfläche 24 gewährleistet in größtmöglichem Umfang ein minimales Gewicht sowie ein gutes Crash-Verhalten der Riemenscheibe, während die flachen Vorsprünge 34 eine gute Befestigung der Riemenscheibe auf einer Welle oder einem anderen Tragglied ermöglichen.

Natürlich sind zahlreiche Abänderungen des beschriebenen Ausführungsbeispieles möglich, ohne das Grundprinzip der Erfindung zu verlassen. So könnte man anstelle eines Innenfutterblockes mit einziehbaren Wandungsteilen 50, 52 die Innenrillen 32 auch durch spanabhebende Verformung erzeugen, insbesondere in den Fällen, bei denen der Durchmesser des Innenfutterblockes nicht ausreichend groß ist, um eine zusammenziehbare Konstruktion des Innenfutterblocks zuzulassen.

Patentansprüche :

1. Mehrfach-V-Riemenscheibe, geformt aus einem schalenförmigen Blech-Rohling (10) mit einer Endwandung (12) und einer damit aus einem Stück bestehenden zylindrischen Wandung (14), welch letztere sich von der Endwandung seitlich erstreckt und eine Innenfläche (24) und eine Außenfläche (26) aufweist, in denen jeweils eine Anzahl von miteinander abwechselnden Vorsprüngen (30, 34) und Rillen (28, 32) ausgebildet sind, wobei jeweils eine in der Innenfläche ausgebildete Rille mit einem Vorsprung in der Außenfläche der zylindrischen Wandung fluchtet und eine Rille in der Außenfläche mit einem Vorsprung in der Innenfläche fluchtet und die Stärke der zylindrischen Wandung zwischen den Tälern der Rillen in der Außenfläche und den Vorsprüngen in der Innenfläche beträchtlich geringer ist als zwischen den Tälern der Rillen in der Innenfläche und den Vorsprüngen in der Außenfläche und ferner die Tiefe der Rillen in der Außenfläche größer ist als die Tiefe der Rillen in der Innenfläche, dadurch gekennzeichnet, daß die Gesamtlänge aller Vorsprünge (34) in der Innenfläche (24) wesentlich größer ist als die Gesamtlänge aller Vorsprünge (30) in der Außenfläche (26), wobei die Vorsprünge (34) in der Innenfläche (24) eine durch die Rillen (32) in der Innenfläche unterbrochene gerade Linie in Axialrichtung der zylindrischen Wandung (14) bilden.

2. Mehrfach-V-Riemenscheibe nach Anspruch 1, dadurch gekennzeichnet, daß die Vorsprünge (30) in der Außenfläche (26) eine im wesentlichen abgerundete Form in axialer Richtung der zylindrischen Wandung (14) aufweisen, wobei der in der radialen Außenfläche liegende Teil jedes Vorsprunges (30) in an sich bekannter Weise annähernd punktförmig ist.

3. Mehrfach-V-Riemenscheibe nach Anspruch 1 oder 2, dadurch gekennzeichnet, daß an jedem Ende der zylindrischen Wandung (14) ein nach außen gerichteter Flansch (22, 23) in an sich bekannter Weise ausgebildet ist.

4. Verfahren zur Herstellung einer Mehrfach-V-Riemenscheibe aus einem schalenförmigen Blech-Rohling mit einer Endwandung und einer damit aus einem Stück bestehenden und sich seitlich von dieser erstreckenden zylindrischen Wandung, dadurch gekennzeichnet, daß die zylindrische Wandung unter Verringerung ihrer Axialabmessung verformt wird, wobei die zylindrische Wandung radial einwärts unter Formung einer Mehrzahl von Rillen in ihrer Außenfläche zur Aufnahme eines Mehrfach-V-Riemens radial einwärts gepreßt wird und eine Mehrzahl von Rillen in der Innenfläche geformt wird, und zwar mit einer wesentlich geringeren Tiefe als die Tiefe der Rillen in der Außenfläche, derart, daß die Innenfläche zwischen den Rillen in axialer Richtung der zylindrischen Wandung gerade verlaufende Vorsprünge bildet.

FIG.1

FIG.2

FIG.3

FIG.4a

FIG.4b

FIG.5

Europäisches
Patentamt

**EUROPÄISCHER RECHERCHENBERICHT**

Nummer der Anmeldung

| | **EINSCHLÄGIGE DOKUMENTE** | | EP 82100749.9 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE - A - 2 304 452 (WOLBERT) <br> * Gesamt * <br> -- | 1,2,4 | F 16 H 55/44 <br> B 21 D 53/26 |
| X | DE - A - 872 138 (WÜLFEL) <br> * Gesamt * <br> -- | 1 | |
| X | US - A - 2 696 740 (ZATKO) <br> * Gesamt * <br> -- | 1,3 | |
| A | US - A - 3 987 683 (SINGH) <br> * Gesamt * <br> -- | 3 | |
| A | DE - A1 - 2 438 815 (DAYCO CORP.) <br> * Gesamt * <br> -- | | RECHERCHIERTE SACHGEBIETE (Int. Cl. ³) |
| A | FR - A - 994 666 (BOMBLED) <br> * Gesamt * <br> -- | | F 16 H 7/00 <br> F 16 H 9/00 <br> F 16 H 55/00 |
| A | FR - A - 1 120 362 (MOTOR-COND.) <br> * Gesamt * <br> -- | | B 21 D 17/00 <br> B 21 D 53/00 <br> B 21 K 1/00 |
| A,D | DE - B2 - 2 633 039 (ASPRO, INC.) <br> * Gesamt * <br> -- | | |
| A,D | US - A - 4 273 547 (BYTZEK) <br> * Gesamt * <br> ---- | | |

X Der vorliegende Recherchenbericht wurde für alle Patentansprüche erstellt.

| Recherchenort | Abschlußdatum der Recherche | Prüfer |
|---|---|---|
| WIEN | 03-12-1982 | SCHATEK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A . technologischer Hintergrund
O : nichtschriftliche Offenbarung
P : Zwischenliteratur
T : der Erfindung zugrunde liegende Theorien oder Grundsatze

E : älteres Patentdokument, das jedoch erst am oder nach dem Anmeldedatum veröffentlicht worden ist
D · in der Anmeldung angeführtes Dokument
L : aus andern Gründen angeführtes Dokument

& : Mitglied der gleichen Patentfamilie, übereinstimmendes Dokument

EPA Form 1503 03 82